# EUROPÄISCHE PATENTSCHRIFT

(11) **EP 3 737 582 B1**
(45) Veröffentlichungstag und Bekanntmachung des Hinweises auf die Patenterteilung: **20.10.2021**
(21) Anmeldenummer: 19723721.7
(22) Anmeldetag: 02.05.2019
(51) Int. Cl.: B60M 1/225, B60M 1/24

(54) **KLEMME UND FAHRDRAHTTRÄGERANORDNUNG**
CLAMP AND CONTACT WIRE CARRIER ASSEMBLY
ATTACHE ET ENSEMBLE SUPPORT DE FIL DE CONTACT

(30) Priorität: 18.05.2018 DE 102018207894
(43) Veröffentlichungstag der Anmeldung: 18.11.2020
(73) Patentinhaber: Siemens Mobility GmbH, 81739 München (DE)
(72) Erfinder: RÜHL, Martin, 91054 Erlangen (DE); HAHN, Gunter, 91353 Hausen (DE); TERFLOTH, Sebastian, 91080 Uttenreuth (DE)
(86) Internationale Anmeldenummer: PCT/EP2019/061284
(87) Internationale Veröffentlichungsnummer: WO 2019/219399

(56) Entgegenhaltungen:
- EP-A1- 3 340 387
- EP-A2- 0 338 299
- DE-C- 813 852
- DE-U1- 9 314 869
- FR-A- 633 275

## Beschreibung

Die Erfindung betrifft eine Klemme zur Befestigung eines Fahrdrahts an einem Tragseil oder einem Gleithängerseil sowie eine Fahrdrahtträgeranordnung umfassend mindestens eine derartige Klemme.

Bei der Gestaltung von Fahrleitungssystemen für schienengebundene Systeme (z. B. Bahnanwendungen) wurde bisher davon ausgegangen, dass der Stromabnehmer mit der Schleifleiste den Fahrdraht von seiner Unterseite in einem vorgesehenen Kontaktbereich kontaktiert. Dies wird durch eine maximale zulässige Seitenlage des Fahrdrahtes auf der Schleifleiste beschrieben, die bisher konstruktiv sichergestellt wurde. Da bei schienengebundenen Systemen der Fahrweg vorgegeben ist, kann an den meisten Positionen entlang eines Fahrweges ein Kontakt zwischen Schleifleiste und Fahrdraht im Wesentlichen senkrecht von unten erfolgen.

Bei kurvigen (seitlich geneigten) Strecken und insbesondere bei nicht-schienengebundenen Systemen kann es durch seitliche Relativbewegung zwischen Fahrzeug und Oberleitung zu der Situation kommen, dass der Fahrdraht den vorgesehenen Kontaktbereich auf der Schleifleiste verlässt und sich in den seitlichen Grenzbereich bewegt. Dort wird der Fahrdraht nicht mehr ausschließlich von unten, sondern aufgrund der Neigung des seitlichen Stromabnehmerbereichs (oder vom Auflaufhorn) von der Seite beschliffen. Aus diesem Grund werden für entsprechende Systeme Lichträume seitlich und oberhalb des Fahrdrahtes festgelegt, die frei von Fahrleitungsbauteilen zu gestalten sind. Der Lichtraum wird ausgehend von der Fahrdrahtunterkante durch einen Anstellwinkel gegenüber der Horizontalen α beschrieben und einer Lichtraumhöhe H über dem Fahrdraht.

Fahrdrähte weisen in der Regel zwei gegenüberliegende Klemmrillen auf. Über die Klemmrillen des Fahrdrahtes ist dann eine Vielzahl von Klemmen mit diversen Funktionen (Stabilisierung der Seiten- und Höhenlage des Fahrdrahtes, Leistungseinspeisungen etc.) auf dem Fahrdraht befestigt. Da eine seitliche Relativbewegung zwischen Fahrdraht und Fahrzeug für schienengebundene Systeme in der Vergangenheit nur ein nebengeordnetes Problem darstellte, sind die bekannten Klemmen breiter als der Fahrdraht an seiner dicksten Stelle. Aufgrund dieses Überstandes kann es zur Kollision zwischen dem seitlichen Bereich des Stromabnehmers und den Klemmen an der Fahrleitung kommen, wenn die Neigung gegenüber der Horizontalen des seitlichen Bereichs des Stromabnehmers größer ist als die mögliche Neigung zwischen einer Tangente an der Fahrdrahtau-ßenkante und dem über den Fahrdraht hinausstehenden Teil der Klemme. Weiterhin können in bisherigen Lösungen weitere, an den Klemmen befestigte Bauteile (Seitenhalter, Hängerseil) den Lichtraum verletzen und so die Gefahr einer Kollision weiter erhöhen.

Hänger dienen in der Oberleitung zur Sicherstellung der Fahrdrahthöhenlage, indem der Fahrdraht mittels einer Klemme über ein Hängerseil am Tragseil aufgehängt wird, sodass die Gewichtskraft der Hänger und der anteilig an ihnen befestigten Fahrdrähte und eventueller Zusatzlasten (Schnee, Eis, Wind) über den Hänger in das Tragseil eingeleitet werden. Fahrdraht und Tragseil werden mit dem Hängerseil über Hängerklemmen verbunden. Da sie an den Fahrdrähten festgeklemmt sind, führen unterschiedliche Längenänderungen zu einer Verschiebung der Anklemmstellen und damit zu einer Schrägstellung des Hängers. Die Länge der Hänger beträgt in normalen Kettenwerken ca. 0,3 bis 2,0 m.

In der FR 633 275 A wird eine Verbindungseinrichtung zwischen einem Tragseil und einem Fahrdraht einer Fahrleitungsanlage für Schienenfahrzeuge beschrieben.

Bei beengten Platzverhältnissen, z. B. wenn die Oberleitung unter Brücken/in Tunneln hindurchgeführt werden muss, wird die Höhe des Tragseils und des Fahrdrahtes gegenüber dem Gleis oder der Fahrbahn (eHighway) verringert. Damit kann sich auch die nötige Länge des Hängers auf unter 0,3 m verringern, sodass konventionelle Hänger mit festen Anklemmstellen und einem dazwischenliegenden Hängerseil nicht mehr eingesetzt werden können. Da die Klemmen eine definierte Bauhöhe haben, wäre ab einem Mindestabstand zwischen Fahrdraht und Tragseil kein Hängerseil mehr einbaubar. Dieser Abstand von Fahrdraht und Tragseil wird als kleinste baubare Hängerlänge bezeichnet. Außerdem würden oben genannte, unterschiedliche Längenausdehnungen zwischen Fahrdraht und Tragseil sofort zu einer deutlichen Schrägstellung des Hängers führen, die sogar größer sein könnte, als die Länge des Hängers. Erhebliche Lage- und Zugkraftfehler in den Fahrdrähten wären die Folge.

Aus diesem Grund existieren für geringe Hängerlängen sogenannte Gleithänger. Sie bestehen nicht mehr aus einem Hängerseil und festen Anklemmstellen an Fahrdraht und Tragseil, sondern aus einer fest mit dem Fahrdraht verbundener Klemme, die einen Gleitbügel (gegebenenfalls mit einem Gleiteinsatz) trägt. Dieser wird über das Tragseil oder ein am Tragseil, links und rechts der Gleitklemme befestigtes, Gleithängerseil gelegt, mit der Klemme am Fahrdraht befestigt und ermöglicht so ein hin- und hergleiten des Tragseils oder des Gleithängerseils durch den Gleitbügel. Längenänderungen zwischen Tragseil oder Gleithängerseil(en) und Fahrdraht werden vollständig ausgeglichen, ohne dass sich der Hänger schräg stellt und Lagefehler das Ergebnis wären.

Der Mindestabstand zwischen Fahrdraht und Tragseil ist durch die Bauhöhe der Klemme begrenzt. Durch variable Längen der Gleitbügel oder den Einsatz von Gleithängerseilen kann zwischen Mindestabstand und minimal baubarer Hängerlänge stufenlos gewählt werden. Der Anwendungsbereich der Gleitklemmen umfasst im Stand der Technik nur lotrechte Kettenwerke, in denen Fahrdraht und Tragseil direkt übereinander angeordnet sind. Aufgrund der geometrischen Gestaltung der bekannten Klemme ragen diese insbesondere mit ihrer Schraubverbindung weit über den Fahrdraht hinaus und sind also für nicht-schienengebundene Anwendungen kaum geeignet.

Hänger sind die Bauteile, welche bei Oberleitungen am häufigsten vorkommen (etwa alle drei Meter entlang des Fahrdrahtes). Die Montage der Hänger ist mit verfügbarkeitsreduzierenden Sperrzeiten verbunden. Insbesondere bei Baustellen für die Elektrifizierung über Autobahnen (eHighway) sind Sperrpausen mit hohen Kosten und Staubildung verbunden. Dementsprechend ist eine einfache und schnelle Montage aller Klemmen von hoher Bedeutung. Zudem muss insbesondere auf Autobahnen vermieden werden, dass Bauteile bei der Montage auf die Fahrbahn fallen können, da diese sonst durch später darüberfahrende Fahrzeuge aufgewirbelt und bei nachfolgenden Fahrzeugen zu Schäden führen können.

Für Gleithängerklemmen können als Anforderungen zusammengefasst werden, dass
1) der Lichtraum im Winkel α seitlich zum Fahrdraht bis zu einer Höhe H freigehalten wird, um eine Kollision des Stromabnehmers mit der Klemme zu verhindern;
2) alle betrieblich auftretenden Kräfte übertragen werden;
3) durch die Bewegung des Tragseils oder des Gleithängerseils im Gleitbügel weder das Tragseil oder Gleithängerseil noch die Klemme durch Abrieb beschädigt werden;
4) eine schnelle und einfache Montage des vollständig vorkonfektionierten Bauteils ohne Demontage in einzelne Kleinteile möglich ist (bei der Montage soll vermieden werden, dass durch das Montagepersonal eine falsche Justierung/Einstellung erfolgen kann, Spezialwerkzeug soll nicht nötig sein);
5) eine Vorzugsmontagerichtung bzw. eine Vorgabe an die Einbaurichtung vermieden wird, um die Winkelfreiheit zu ermöglichen;
6) die Werkzeugkosten bei der Herstellung durch Nutzung von möglichst wenigen unterschiedlichen Werkzeugen (z. B. Gussformen, Gesenke beim Schmieden) verringert werden.

Bekannte Klemmen sind in der Regel insbesondere für schienengebundene Anwendungen konzipiert und erfüllen stets nur einen Teil der genannten Anforderungen.

Die Aufgabe besteht darin, eine Klemme der eingangs genannten Art bereitzustellen, die alle oben genannten Anforderungen erfüllt und insbesondere besser für nicht-schienengebundene Anwendungen geeignet ist.

Erfindungsgemäß wird eine Klemme zur Befestigung eines Fahrdrahts an einem Tragseil zur Verfügung gestellt, umfassend:
- zwei Klemmhälften,
- eine Verbindungseinrichtung zur Verbindung der beiden Klemmhälften, wobei die Klemmhälften umfassen:
- jeweils ein erstes Ende, wobei die ersten Enden in einem verbundenen Zustand der Klemmhälften aufeinander zulaufen, um in Klemmrillen eines Fahrdrahtes einzugreifen,
- jeweils ein zweites Ende, wobei die zweiten Enden in einem verbundenen Zustand der Klemmhälften so ineinandergreifen, dass sie einen Gleitbügel für ein Einhängen der Klemme an einem Tragseil bereitstellen.

Mit einer Klemme dieser Bauart können alle oben genannten Anforderungen erfüllt werden. Der durch die beiden Klemmhälften gebildete Klemmkörper kann so gestaltet werden, dass alle Kräfte entsprechend den Anforderungen übertragen werden können und der freizuhaltende Lichtraum nicht verletzt wird. Der im Wesentlichen symmetrische Aufbau der Klemmhälften stellt sicher, dass es keine bevorzugte Einbaurichtung gibt. Weiterhin ist es deutlich leichter, den freizuhaltenden Lichtraum nicht zu verletzen.

Gegenüber den bekannten Klemmen vereinfacht sich die Montage, da die Klemme nicht mehr demontiert werden muss, um den Gleitbügel über das Tragseil oder Gleithängerseil zu legen. Zur Montage muss lediglich die Verbindungseinrichtung beider Klemmhälften gelockert werden (z. B. eine Schraube), sodass die beiden zweiten Enden der Klemmhälften sich am Gleitbügel oben öffnen. Zur Montage kann (ein gegebenenfalls vorhandenes Gleitelement auf das Seil gesetzt werden, dann) die gelockerte Klemme über Tragseil oder Gleithängerseil (und Gleitelement) gelegt und zugeschraubt werden, sodass mit dem Zudrehen der Schraube die Klemme in den Fahrdraht greift und gleichzeitig das (Gleitelement zusammen mit dem) Seil umfasst.

Die Klemme kann in Hinblick auf ihre Außenmaße symmetrisch gestaltet sein. Dadurch wird zu beiden Seiten des Fahrdrahtes ein Freihalten desselben Anstellwinkels erreicht. Außerdem kann die Klemme in beliebiger Orientierung auf den Fahrdraht aufgesetzt werden. Aufgrund der Symmetrie können die Rohteile der beiden Klemmhälften identisch sein und erfordern damit nur ein Guss- oder Schmiedewerkzeug.

Die resultierende Klemme ist deutlich schmaler, ohne auf zur Kraftübertragung notwendige Teile der Klemme zu verzichten. Die erfindungsgemäße Lösung verhindert somit zuverlässig Kollisionen der Wippenelemente/Hörner von Pantographen an Klemmen der Oberleitung und vereinfacht die Installation und Herstellung der Klemmen.

In einer bevorzugten Ausführungsform umfasst die Verbindungseinrichtung eine durch beide Klemmhälften verlaufende Senkschraube. Damit kann ein entlang des Fahrdrahtes noch flacherer Bau der Klemme erreicht werden und die Gefahr von Kollisionen weiter gesenkt werden.

In einer bevorzugten Ausführungsform ragt die Senkschraube im voll eingeschraubten Zustand in einem verbundenen Zustand der Klemmhälften um 1 mm oder weniger in und/oder gegen die Einschraubrichtung über die Klemme hinaus. Auch dies stellt einen möglichst flachen Aufbau der Klemmen sicher und vermeidet ein Eindringen in den Lichtraum. In einer weiteren bevorzugten Ausführungsform ragt die Senkschraube im voll eingeschraubten Zustand in einem verbundenen Zustand der Klemmhälften nicht in oder gegen die Einschraubrichtung über die Klemme hinaus. Die axialen Enden der Senkschraube (und gegebenenfalls einer Mutter) fluchten also im voll eingeschraubten Zustand in einem verbundenen Zustand der Klemmhälften zumindest mit den Außenseiten der Klemmhälften oder enden sogar weiter innerhalb der Klemmhälften.

In einer bevorzugten Ausführungsform besteht die Klemme nur aus den zwei Klemmhälften, einem Gleiteinsatz und der Senkschraube. Da es sich dann bei der Klemme lediglich um zwei Klemmhälften handelt, die mit einer gemeinsamen Schraube am Fahrdraht befestigt werden, ist die Montage schnell und einfach. Der Gleiteinsatz wird auf das Tragseil oder Gleithängerseil gesetzt, die geöffneten zweiten Enden um den Gleiteinsatz gelegt und die geöffneten ersten Enden auf den Fahrdraht gesetzt. Durch einmaliges Zudrehen der einzigen Schraube sind dann alle Teile fest miteinander verbunden. Ein Gegenhalten von Schraube und Mutter wie bei bekannten Klemmen entfällt. Außerdem muss die Klemme nicht ausgerichtet oder nachjustiert werden. Damit ist die Klemme sowohl in der Vorkonfektionierung wie auch bei der Montage auf der Baustelle schneller und einfacher zu handhaben als bisherige Lösungen.

In einer bevorzugten Ausführungsform ist die Breite der Klemme im Bereich des ersten Endes kleiner als oder gleich 120 % der horizontalen Breite des zu verbindenden Fahrdrahtes, insbesondere weniger als 2 mm breiter als der zu verbindende Fahrdraht ist. Die Klemme ist derart dimensioniert, dass sie in einer ideal vertikalen Klemmposition der Klemme über dem Fahrdraht nicht in einen ausgehend von der Fahrdrahtunterkante durch einen Anstellwinkel α (oder Tangenten an der Fahrdrahtunterkante mit Winkel a) relativ zur Horizontalen definierten Lichtraum eindringt. Unter der Horizontalen Breite ist hier die maximale horizontale Ausdehnung des Fahrdrahtes (in y-Richtung) senkrecht zur Längsrichtung (x-Richtung) des Fahrdrahtes zu verstehen. Übliche Fahrdrähte haben eine Breite von etwa 8 bis 15 mm, wobei sich dann die entsprechenden maximalen Maße für die Klemme aus dem Fahrdrahttyp ergeben, für den die Klemme vorgesehen ist (siehe beispielsweise DIN EN 50149). Mit dem erfindungsgemäßen Aufbau der Klemme ist es möglich, passende Klemmen für jede Fahrdrahtbreite bereitzustellen, die jeweils im Bereich des ersten Endes nur geringfügig breiter als der zu verbindende Fahrdraht sind.

In einer bevorzugten Ausführungsform ist die Breite der Klemme vom ersten Ende bis zum Ansatz des zweiten Endes kleiner als oder gleich 120 % der horizontalen Breite des zu verbindenden Fahrdrahtes, insbesondere weniger als 2 mm breiter als der zu verbindende Fahrdraht ist. Die Klemme ist derart dimensioniert, dass sie in einer ideal vertikalen Klemmposition der Klemme über dem Fahrdraht nicht in einen ausgehend von der Fahrdrahtunterkante durch einen Anstellwinkel α (oder Tangenten an der Fahrdrahtunterkante mit Winkel a) relativ zur Horizontalen definierten Lichtraum eindringt. Damit wird sichergestellt, dass selbst bei leichter Neigung gegenüber der Vertikalen im eingebauten Zustand die Klemme nicht in den Lichtraum eindringt und so die Gefahr von Kollisionen weiter verringert. Auch hier ergeben sich jeweils die maximalen Maße für die Klemme aus dem Fahrdrahttyp, für den die Klemme vorgesehen ist (siehe beispielsweise DIN EN 50149).

In einer bevorzugten Ausführungsform umfasst eines der zweiten Enden einen Gleiteinsatz, der im verbundenen Zustand der Klemme eine Auflagefläche der Klemme auf dem Tragseil bereitstellt. Die Klemme kann nur aus den zwei Klemmhälften, dem Gleiteinsatz und der Senkschraube bestehen. Der Gleiteinsatz kann abnehmbar an einem der beiden zweiten Enden der Klemmhälften befestigt (z. B. festgeklemmt) sein.

Erfindungsgemäß wird außerdem eine Fahrdrahtträgeranordnung bereitgestellt, umfassend einen Fahrdraht mit zwei Klemmrillen sowie mindestens eine an den Fahrdraht geklemmte Klemme nach einem der vorstehenden Ansprüche.

In einer bevorzugten Ausführungsform ist die Klemme derart dimensioniert, dass sie in einer ideal vertikalen Klemmposition der Klemme über dem Fahrdraht nicht in einen ausgehend von der Fahrdrahtunterkante durch einen Anstellwinkel α = 60° relativ zur Horizontalen definierten Lichtraum eindringt. Die Klemme ist derart dimensioniert, dass sie in einer ideal vertikalen Klemmposition der Klemme über dem Fahrdraht nicht in einen ausgehend von der Fahrdrahtunterkante durch zwei Tangenten mit einem Winkel α = 60° relativ zur Horizontalen definierten Lichtraum eindringt. Besonders bevorzugt ist die Klemme derart dimensioniert, dass sie in einer ideal vertikalen Klemmposition der Klemme über dem Fahrdraht nicht in einen ausgehend von der Fahrdrahtunterkante durch einen Anstellwinkel α = 70° relativ zur Horizontalen definierten Lichtraum eindringt. Durch diese Ausführungsformen wird in zunehmendem Maße das Risiko von Kollisionen der Klemme mit Stromabnehmern verringert oder sogar ausgeschlossen.

In einer weiteren Ausführungsform umfasst die Fahrdrahtträgeranordnung ein Tragseil oder ein Gleithängerseil, an dem die Klemme eingehängt ist, wobei die Auflagefläche eine im Wesentlichen halbkreisförmigen Querschnitt senkrecht zum Tragseil aufweist, und wobei ein Radius der Auflagefläche größer als ein Radius des Tragseils ist. Somit können trotz der geringen Bauhöhe der Fahrdrahtträgeranordnung und der Klemme gewisse Toleranzen in der Höhe und in der Winkelstellung ausgeglichen werden.

In einer bevorzugten Ausführungsform ist die Breite der Klemme im Bereich des ersten Endes kleiner als oder gleich 120 % der horizontalen Breite des Fahrdrahtes, insbesondere weniger als 2 mm breiter als der zu verbindende Fahrdraht ist. Die Klemme ist derart dimensioniert, dass sie in einer ideal vertikalen Klemmposition der Klemme über dem Fahrdraht nicht in einen ausgehend von der Fahrdrahtunterkante durch einen Anstellwinkel α (oder Tangenten an der Fahrdrahtunterkante mit Winkel a) relativ zur Horizontalen definierten Lichtraum eindringt. Mit einer solchen Fahrdrahtträgeranordnung lassen sich Kollisionen mit Stromabnehmern effektiv vermeiden, da die Klemme in horizontaler Richtung senkrecht zum Fahrdraht relativ zum Fahrdraht sehr schmal ist.

In einer bevorzugten Ausführungsform ist die Breite der Klemme vom ersten Ende bis zum Ansatz des zweiten Endes kleiner als oder gleich 120 % der horizontalen Breite des Fahrdrahtes ist, insbesondere weniger als 2 mm breiter als der zu verbindende Fahrdraht ist. Die Klemme ist also derart dimensioniert, dass sie in einer ideal vertikalen Klemmposition der Klemme über dem Fahrdraht nicht in einen ausgehend von der Fahrdrahtunterkante durch einen Anstellwinkel α (oder Tangenten an der Fahrdrahtunterkante mit Winkel a) relativ zur Horizontalen definierten Lichtraum eindringt. Damit ist die Klemme über den Großteil Ihrer Höhe so schmal, dass auch bei einer leichten Schräglage der Klemme in der eingebauten Position keine Kollisionsgefahr mit Stromabnehmern vorliegt.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die im Zusammenhang mit den Zeichnungen näher erläutert werden. Es zeigen:
- Figur 1: eine schematische Darstellung des Lichtraumes um einen Fahrdraht,
- Figur 2: eine Frontansicht einer Fahrdrahtträgeranordnung mit einer Klemme des Standes der Technik,
- Figur 3: eine Ausführungsform einer erfindungsgemäßen Klemme in einer Seitenansicht, und
- Figur 4: die Ausführungsform der Klemme aus Figur 3 in einer Frontansicht.

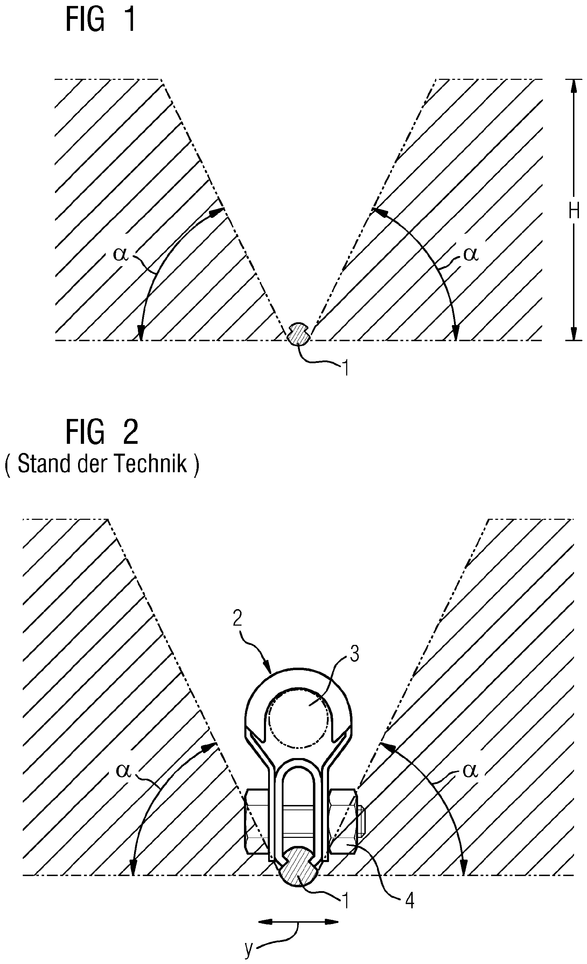

In der Figur 1 ist eine schematische Darstellung des Lichtraumes seitlich und oberhalb eines Fahrdrahtes 1 gezeigt. Der Lichtraum ist ausgehend von der Fahrdrahtunterkante durch einen Anstellwinkel α relativ zur Horizontalen definiert. Je nach Anwendung kann ein anderer Lichtraum freizuhalten sein, um die Gefahr von Kollisionen möglichst gering zu halten. Für nicht-schienengebundene Anwendungen ist regelmäßig ein deutlich größerer Lichtraum freizuhalten.

Die Figur 2 zeigt eine Frontansicht einer Klemme 2 des Standes der Technik. Die Klemme 2 ist an den Fahrdraht 1 geklemmt, wodurch dieser an einem Tragseil 3 oder Gleithängerseil eingehängt ist. Die Teile der Klemme 2 sind mittels einer seitlich (horizontal in y-Richtung) recht ausladenden Schraubverbindung 4 verbunden. Insbesondere die Schraubverbindung 4, aber auch Teile des Körpers der Klemme 2 dringen in den Lichtraum ein. Insgesamt weist diese Klemme 2 daher ein deutlich erhöhtes Risiko für Kollisionen mit Stromabnehmern auf und ist für nicht-schienengebundene Anwendungen eher ungeeignet.

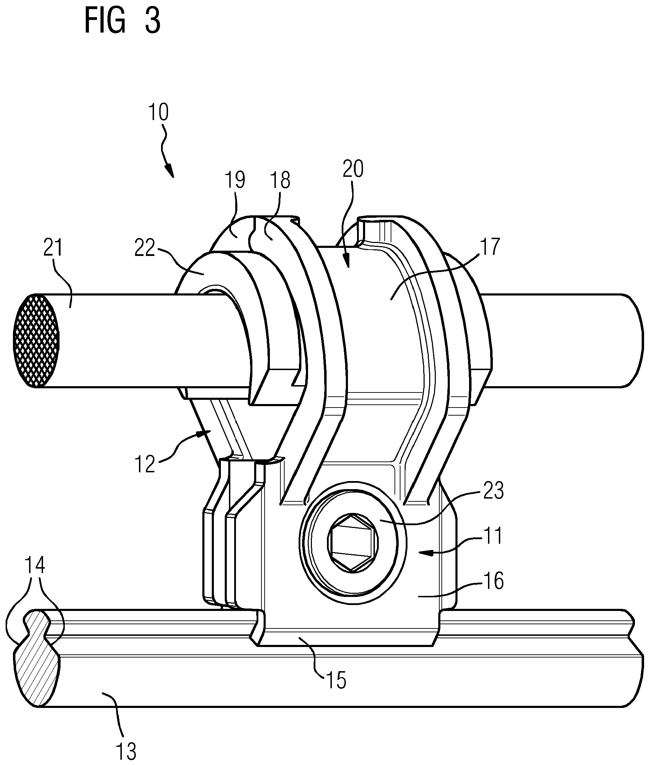

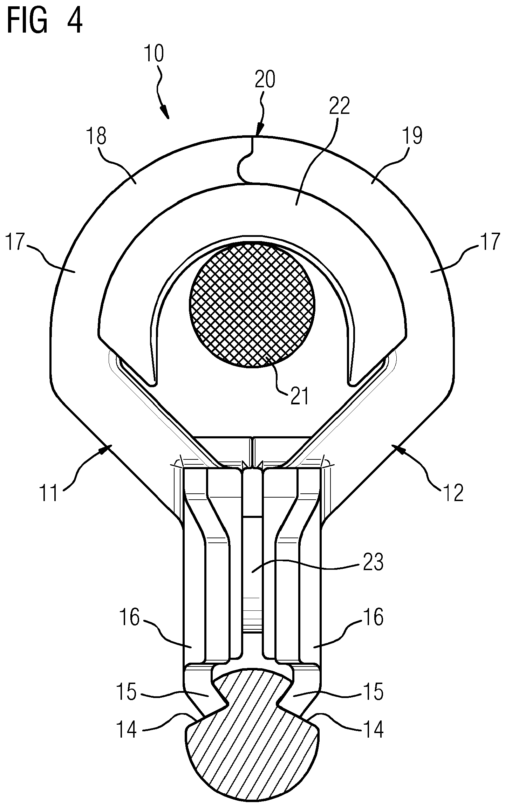

Eine Ausführungsform einer erfindungsgemäßen Klemme 10 ist in den Figuren 3 und 4 dargestellt. Die Klemme 10 umfasst zwei Klemmhälften 11, 12. Die Klemme 10 ist an einen Fahrdraht 13 geklemmt, der dazu zwei Klemmrillen 14 aufweist.

Die Klemmhälften 11, 12 weisen jeweils ein erstes Ende 16 und ein zweites Ende 17 auf. Die ersten Enden 16 laufen in einem verbundenen Zustand der Klemmhälften 11, 12 aufeinander zu, um über jeweils einen Klemmvorsprung 15 in eine Klemmrille 14 des Fahrdrahtes 13 einzugreifen.

Die zweiten Enden 17 greifen im verbundenen Zustand der Klemmhälften 11, 12 so ineinander, dass sie über Gleitbügelteile 18, 19 einen Gleitbügel 20 für eine gleitende Verbindung an einem Tragseil 21, an dem die Klemme 10 eingehängt wird, bereitstellen.

Die Klemme umfasst außerdem einen Gleiteinsatz 22 zum Gleiten auf dem Tragseil 21 oder Gleithängerseil. Über die Wahl des Gleiteinsatzes 22 kann auch der Abstand zwischen Fahrdraht 13 und Tragseil 21 in einem gewissen Rahmen eingestellt werden, ohne den Rest der Klemme zu verändern. Der Gleiteinsatz 22 kann an einem der Gleitbügelteile 18, 19 abnehmbar befestigt sein, um die Anzahl der losen Teile vor der Installation zu reduzieren. Die Gleitbügelteile 18, 19 können ineinandergreifende Stufenstrukturen aufweisen, um eine sichere Verbindung zu erreichen.

Die Klemme 10 umfasst weiterhin eine Verbindungseinrichtung 23 zur Verbindung der beiden Klemmhälften 11, 12. Die Verbindungseinrichtung 23 ist hier in Form einer Senkschraube vorgesehen. Vorzugsweise ragt die Senkschraube im voll eingeschraubten Zustand in einem verbundenen Zustand der Klemmhälften 11, 12 nur geringfügig, beispielsweise um maximal 1 mm, in oder gegen die Einschraubrichtung über die Klemme 10 hinaus. Somit kann sichergestellt werden, dass auch die Senkschraube nicht in den Lichtraum des Fahrdrahtes (beispielsweise mit einem Anstellwinkel von 60°) hineinragt. Die axialen Enden der Senkschraube fluchten also im voll eingeschraubten Zustand in einem verbundenen Zustand der Klemmhälften 11, 12 zumindest mit den Außenseiten der Klemmhälften 11, 12 oder enden sogar weiter innerhalb der Klemmhälften 11, 12.

Die Klemme 10 kann vorzugsweise nur aus den zwei Klemmhälften 11, 12, dem Gleiteinsatz 22 und der Senkschraube bestehen.

Die Breite der Klemme 10 vom ersten Ende 16 bis zum Ansatz des zweiten Endes 17 ist vorzugsweise kleiner als oder gleich 120 % der horizontalen Breite des Fahrdrahtes 13. Unter dem Ansatz des zweiten Endes 17 ist hier der untere Ansatz der Gleitbügelteile 18, 19 zu verstehen. In einer ideal vertikalen Klemmposition der Klemme 10 über dem Fahrdraht 13 dringt die Klemme 10 nicht in einen ausgehend von der Fahrdrahtunterkante durch einen Anstellwinkel α = 60° relativ zur Horizontalen definierten Lichtraum ein. Damit weist die erfindungsgemäße Klemme 10 eine deutlich reduzierte Kollisionsgefahr gegenüber Klemmen des Standes der Technik auf und ist insbesondere für nicht-schienengebundene Anwendungen deutlich besser geeignet.

Obwohl die Erfindung im Detail durch bevorzugte Ausführungsbeispiele näher illustriert und beschrieben wurde, so ist die Erfindung nicht durch die offenbarten Beispiele eingeschränkt und andere Variationen können vom Fachmann hieraus abgeleitet werden, ohne den durch die beiliegenden Ansprüche bestimmten Schutzumfang der Erfindung zu verlassen.

## Patentansprüche

1. Klemme (10) zur Befestigung eines Fahrdrahtes (13) an einem Tragseil (21) oder Gleithängerseil, umfassend:
- zwei Klemmhälften (11, 12),
- eine Verbindungseinrichtung (23) zur Verbindung der beiden Klemmhälften (11, 12), wobei die Klemmhälften (11, 12) umfassen:
- jeweils ein erstes Ende (16), wobei die ersten Enden (16) in einem verbundenen Zustand der Klemmhälften (11, 12) aufeinander zulaufen, um in Klemmrillen (14) eines Fahrdrahtes (13) einzugreifen,
- jeweils ein zweites Ende (17),
**dadurch gekennzeichnet, dass** die zweiten Enden (17) in einem verbundenen Zustand der Klemmhälften (11, 12) so ineinandergreifen, dass sie einen Gleitbügel (20) für ein Einhängen der Klemme (10) an einem Tragseil (21) bereitstellen.

2. Klemme (10) nach Anspruch 1, **dadurch gekennzeichnet, dass** die Verbindungseinrichtung (23) eine durch beide Klemmhälften (11, 12) verlaufende Senkschraube umfasst.

3. Klemme (10) nach Anspruch 2, **dadurch gekennzeichnet, dass** die Senkschraube im voll eingeschraubten Zustand in einem verbundenen Zustand der Klemmhälften (11, 12) um 1 mm oder weniger in oder gegen die Einschraubrichtung über die Klemme (10) hinausragt.

4. Klemme (10) nach Anspruch 1 oder 2, **dadurch gekennzeichnet, dass** die Klemme nur aus den zwei Klemmhälften (11, 12), einem Gleiteinsatz (22) und der Senkschraube besteht.

5. Klemme (10) nach einem der vorstehenden Ansprüche, **dadurch gekennzeichnet, dass** die Breite der Klemme (10) im Bereich des ersten Endes (16) kleiner als oder gleich 120 % der horizontalen Breite des zu verbindenden Fahrdrahtes (13) ist, insbesondere weniger als 2 mm breiter als der zu verbindende Fahrdraht (13) ist.

6. Klemme (10) nach einem der vorstehenden Ansprüche, **dadurch gekennzeichnet, dass** die Breite der Klemme (10) vom ersten Ende (16) bis zum Ansatz des zweiten Endes (17) kleiner als oder gleich 120 % der horizontalen Breite des zu verbindenden Fahrdrahtes (13) ist, insbesondere weniger als 2 mm breiter als der zu verbindende Fahrdraht (13) ist.

7. Klemme (10) nach einem der vorstehenden Ansprüche, wobei eines der zweiten Enden (17) einen Gleiteinsatz (22) umfasst, der im verbundenen Zustand der Klemme (10) eine Auflagefläche der Klemme (10) auf dem Tragseil (21) bereitstellt.

8. Fahrdrahtträgeranordnung umfassend einen Fahrdraht (13) mit zwei Klemmrillen (14) sowie mindestens eine an den Fahrdraht (13) geklemmte Klemme (10) nach einem der vorstehenden Ansprüche.

9. Fahrdrahtträgeranordnung nach Anspruch 8, **dadurch gekennzeichnet, dass** die Klemme (10) derart dimensioniert ist, dass sie in einer ideal vertikalen Klemmposition der Klemme (10) über dem Fahrdraht (13) nicht in einen ausgehend von der Fahrdrahtunterkante durch einen Anstellwinkel α = 60° relativ zur Horizontalen definierten Lichtraum eindringt.

10. Fahrdrahtträgeranordnung nach Anspruch 8 oder 9, weiterhin umfassend ein Tragseil (21) oder ein Gleithängerseil, an dem die Klemme (10) eingehängt ist, wobei die Auflagefläche eine im Wesentlichen halbkreisförmigen Querschnitt senkrecht zum Tragseil (21) aufweist, und wobei ein Radius der Auflagefläche größer als ein Radius des Tragseils (21) ist.

11. Fahrdrahtträgeranordnung nach einem der Ansprüche 8 bis 10, **dadurch gekennzeichnet, dass** die Breite der Klemme (10) im Bereich des ersten Endes (16) kleiner als oder gleich 120 % der horizontalen Breite des Fahrdrahtes (13) ist, insbesondere weniger als 2 mm breiter als der zu verbindende Fahrdraht (13) ist.

12. Fahrdrahtträgeranordnung nach einem der Ansprüche 8 bis 11, **dadurch gekennzeichnet, dass** die Breite der Klemme (10) vom ersten Ende (16) bis zum Ansatz des zweiten Endes (17) kleiner als oder gleich 120 % der horizontalen Breite des Fahrdrahtes (13) ist, insbesondere weniger als 2 mm breiter als der zu verbindende Fahrdraht (13) ist.

## Claims

1. Clamp (10) for fastening a contact wire (13) to a catenary wire (21) or sliding dropper wire, comprising:
- two clamp halves (11, 12),
- a connection facility (23) for connecting the two clamp halves (11, 12), wherein the clamp halves (11, 12) comprise:
- a first end (16) in each case, wherein the first ends (16), in a connected state of the clamp halves (11, 12), converge towards one another in order to engage into clamping grooves (14) of a contact wire (13),
- a second end (17) in each case,
**characterised in that**
the second ends (17), in a connected state of the clamp halves (11, 12), interlock such that they provide a sliding bracket (20) for suspending the clamp (10) on a catenary wire (21).

2. Clamp (10) according to claim 1, **characterised in that** the connection facility (23) comprises a countersunk screw which runs through both clamp halves (11, 12).

3. Clamp (10) according to claim 2, **characterised in that** the countersunk screw, in the fully screwed-in state, in a connected state of the clamp halves (11, 12), protrudes beyond the clamp (10) by 1 mm or less in or against the screwing-in direction.

4. Clamp (10) according to claim 1 or 2, **characterised in that** the clamp only consists of the two clamp halves (11, 12), a sliding insert (22) and the countersunk screw.

5. Clamp (10) according to one of the preceding claims, **characterised in that** the width of the clamp (10) in the region of the first end (16) is less than or equal to 120 % of the horizontal width of the contact wire (13) to be connected, in particular is less than 2 mm wider than the contact wire (13) to be connected.

6. Clamp (10) according to one of the preceding claims, **characterised in that** the width of the clamp (10) from the first end (16) to the edge of the second end (17) is less than or equal to 120 % of the horizontal width of the contact wire (13) to be connected, in particular is less than 2 mm wider than the contact wire (13) to be connected.

7. Clamp (10) according to one of the preceding claims, wherein one of the second ends (17) comprises a sliding insert (22) which, in the connected state of the clamp (10), provides a contact area of the clamp (10) on the catenary wire (21).

8. Contact wire carrier arrangement comprising a contact wire (13) with two clamping grooves (14) as well as at least one clamp (10) according to one of the preceding claims, which is clamped on the contact wire (13).

9. Contact wire carrier arrangement according to claim 8, **characterised in that** the clamp (10) is dimensioned such that, in an ideally vertical clamping position of the clamp (10) above the contact wire (13), it does not intrude into a clearance, starting from the contact wire lower edge, defined by a setting angle α = 60° relative to the horizontal.

10. Contact wire carrier arrangement according to claim 8 or 9, furthermore comprising a catenary wire (21) or a sliding dropper wire, on which the clamp (10) is suspended, wherein the contact area has a substantially semicircular cross-section perpendicular to the catenary wire (21), and wherein a radius of the contact area is greater than a radius of the catenary wire (21).

11. Contact wire carrier arrangement according to one of claims 8 to 10, **characterised in that** the width of the clamp (10) in the region of the first end (16) is less than or equal to 120 % of the horizontal width of the contact wire (13), in particular is less than 2 mm wider than the contact wire (13) to be connected.

12. Contact wire carrier arrangement according to one of claims 8 to 11, **characterised in that** the width of the clamp (10) from the first end (16) to the edge of the second end (17) is less than or equal to 120 % of the horizontal width of the contact wire (13), in particular is less than 2 mm wider than the contact wire (13) to be connected.

## Revendications

1. Pince (10) de fixation d'un fil (13) de contact à un câble (21) porteur ou à un câble de suspension glissant, comprenant :
- deux moitiés (11, 12) de pince,
- un dispositif (23) de liaison pour relier les deux moitiés (11, 12) de pince, les moitiés (11, 12) de pince comprenant :
- chacune une première extrémité (16), les premières extrémités (16) allant l'une sur l'autre dans un état relié des moitiés (11, 12) de pince, pour pénétrer dans des rainures (14) de serrage d'un fil (13) de contact,
- respectivement une deuxième extrémité (17),
**caractérisée en ce que**
les deuxièmes extrémités (17) s'interpénètrent dans un état relié des moitiés (11, 12) de pince de manière à donner un étrier (20) glissant pour une suspension de la pince (10) à un câble (21) porteur.

2. Pince (10) suivant la revendication 1, **caractérisée en ce que** le dispositif (23) de liaison comprend une vis à tête fraisée s'étendant entre les deux moitiés (11, 12) de pince.

3. Pince (10) suivant la revendication 2, **caractérisée en ce que** la vis à tête fraisée dépasse à l'état complètement vissé dans un état relié des deux moitiés (11, 12) de pince de 1 mm ou moins de la pince (10) dans le sens de vissage ou dans le sens contraire.

4. Pince (10) suivant la revendication 1 ou 2, **caractérisée en ce que** la pince n'est constituée que des deux moitiés (11, 12) de pince, d'un insert (22) glissant et de la vis à tête fraisée.

5. Pince (10) suivant l'une des revendications précédentes, **caractérisée en ce que** la largeur de la pince (10) dans la partie de la première extrémité (16) est inférieure ou égale à 120 % de la largeur horizontale du fil (13) de contact à relier, en étant notamment plus large de moins de 2 mm que le fil (13) de contact à relier.

6. Pince (10) suivant l'une des revendications précédentes, **caractérisée en ce que** la largeur de la pince (10) de la première extrémité (16) jusqu'au début de la deuxième extrémité (17) est inférieure ou égale à 120 % de la largeur horizontale du fil (13) de contact à relier, en étant plus large notamment de moins de 2 mm que le fil (13) de contact à relier.

7. Pince (10) suivant l'une des revendications précédentes, dans laquelle l'une des deuxièmes extrémités (17) comprend un insert (22) glissant qui, à l'état relié de la pince (10) donne une surface d'application de la pince (10) au câble (21) porteur.

8. Ensemble de support de fil de contact comprenant un fil (13) de contact ayant deux rainures (14) de serrage ainsi qu'au moins une pince (10) serrée sur le fil (13) de contact suivant l'une des revendications précédentes.

9. Ensemble de support de fil de contact suivant la revendication 8, **caractérisé en ce que** la pince (10) a des dimensions telles que, dans une position verticale idéalement de la pince (10) sur le fil (13) de contact, elle ne pénètre pas dans un espace ambiant défini à partir du bord inférieur du fil de contact par un angle d'incidence α = 60° par rapport à l'horizontal.

10. Ensemble de support de fil de contact suivant la revendication 8 ou 9, comprenant en outre un câble (21) porteur ou un câble de suspension glissant auquel la pince (10) est suspendue, la surface d'application ayant une section transversale sensiblement hémicirculaire perpendiculairement au câble (21) porteur et dans lequel un rayon de la surface d'application est plus grand qu'un rayon du câble (21) porteur.

11. Ensemble de support de fil de contact suivant l'une des revendications 8 à 10, **caractérisé en ce que** la largeur de la pince (10) dans la partie de la première extrémité (16) est intérieure ou égale à 120 % de la largeur horizontale du fil (13) de contact, en étant notamment plus large de moins de 2 mm que le fil (13) de contact à relier.

12. Ensemble de support de fil de contact suivant l'une des revendications 8 à 11, **caractérisé en ce que** la largeur de la pince (10) de la première extrémité (16) au début de la deuxième extrémité (17) est inférieure ou égale à 120 % de la largeur horizontale du fil (13) de contact, en étant notamment plus large de moins de 2 mm que le fil (13) de contact à relier.
